# EUROPEAN PATENT SPECIFICATION

(11) **EP 1 529 755 B1**
(45) Date of publication and mention of the grant of the patent: **28.09.2011**
(21) Application number: 04026331.1
(22) Date of filing: 05.11.2004
(51) Int. Cl.: C01B 31/08, C01B 31/12, H01G 9/00

(54) **Process for production of activated carbon for electrode for electric double layer capacitor and carbon material thereof**
Verfahren zur Herstellung von Aktivkohle für eine Elektrode eines elektrischen Doppelschichtkondensators und Kohlenstoffmaterial dafür
Procédé de préparation de charbon actif pour une électrode de condensateur à double couche et matériau carboné utilisé dans ce procédé

(30) Priority: 07.11.2003 JP 2003378865
(43) Date of publication of application: 11.05.2005
(73) Proprietor: HONDA MOTOR CO., LTD., Tokyo 107-8556 (JP); MITSUBISHI GAS CHEMICAL COMPANY, INC., Tokyo (JP)
(72) Inventor: Fujino, Takeshi, Wako-shi, Saitama, 351-0193 (JP); Shigematsu, Ryusuke, Ibaraki 300-4247 (JP); Kanno, Koichi, Ibaraki 300-4247 (JP)
(74) Representative: Böhm, Brigitte

(56) References cited:
- EP-A- 1 191 558
- US-A- 5 891 822
- US-A1- 2002 057 549
- US-A1- 2002 154 467
- US-A1- 2003 026 753
- US-A1- 2003 139 009
- US-B1- 6 258 337

## Description

### BACKGROUND OF INVENTION

### Technical Field

The present invention relates to a process for production of activated carbon which is used for polarizing electrodes for electric double layer capacitors which are suitable for use for electric double layer capacitors having large capacity and high power, and relates to carbon material which is used in the process.

### Background Art

An electric double layer capacitor has characteristics such as long service life, high cycle characteristics, and characteristics of charge and discharge with large current since there are no chemical reactions during charge and discharge of the capacitor as there are in a conventional secondary battery. Therefore, this capacitor is attracting much attention as a new type of storage battery or as a driving power supply for automobiles and devices. In particular, electric double layer capacitors having large capacity and high power are being developed.

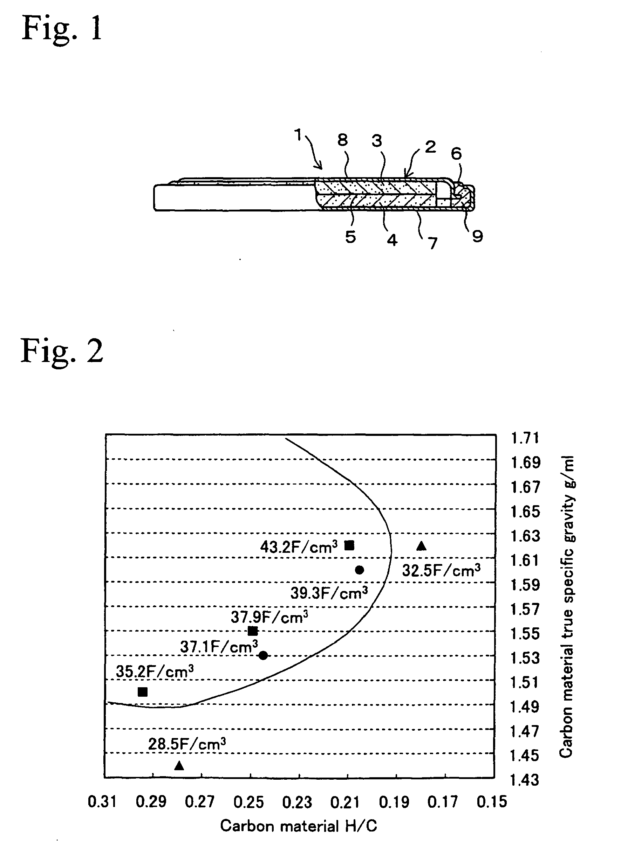

As an example of such an electric double layer capacitor, a button-type electric double layer capacitor is shown in Fig. 1. As is shown in Fig. 1, the capacitor 1 includes case 2, a pair of polarizing electrodes 3 and 4 contained in the case 2, a spacer 5 disposed between the electrodes, and electrolyte solution filled in the case 2. The case 2 comprises an aluminum body 7 having an opening part 6 and an aluminum cover plate 8 which closes the opening part 6. A part between the outer circumference of the cover plate 8 and inner circumference of the body 7 is sealed with a sealing material 9. The polarizing electrodes 3 and 4 comprise a mixture of an activated carbon for an electrode, conductive filler, and binder.

Conventionally, as a method for producing an activated carbon used in such an electric double layer capacitor, for example, a method in which a carbon material is produced by using mesophase pitch as a raw organic material, and the carbon material is activated with alkali (see Japanese Unexamined Patent Application Publication No. Hei 11-373795) is known.

According to the patent publication and the information about an activated carbon which is conventionally known, it is generally thought that the capacitance of a capacitor per unit weight (F/g) greatly depends on the fine structure of an activated carbon and distribution of pores. In particular, capacitance (F) has a tendency to increase depending on increase of specific surface area of the activated carbon and volume of the pores. Therefore, the activated carbon for an electrode of an electric double layer capacitor has been developed from the viewpoint of an efficient production of an activated carbon having a large specific surface area and pore volume.

EP 1 191 558 discloses a carbon material for electric double layer capacitor electrodes which is obtained by a heat treatment and an activation treatment of a material pitch having a softening point in a range of 150°C to 350°C, and a ratio of hydrogen to carbon atoms from 0,50 to 0,90.

US 2003/0139009 discloses an activated carbon material for electric double layer capacitor electrodes. This material has also a true density in the range of 1,3 g/cm³ ≤ d ≤ 1,9 g/cm³.

However, in the conventional activating method, there is a tendency for the capacitance per specific surface area to decrease if the specific surface area is above a certain value. Furthermore, excessive activating treatment is required to obtain an activated carbon having a large specific surface area, and as a result, activating yield is deteriorated.

In particular, there is a problem that capacitance per unit volume (F/cm³) which seems to be most important does not always increase despite volume density (g/cm³) decrease and capacitance per unit weight (F/g) increase. In contract, even in the case in which the electrode is produced with a material having a small specific surface area and pore volume, an electrode having larger capacitance per unit volume can be produced compared to an electrode made from active material having high specific surface area if the volume density can be larger.

As described above, it is necessary to improve both capacitance per unit weight (F/g) and volume density (g/cm³) of activated carbon particle (electrode) to produce activated carbon for an electric double layer capacitor having large capacitance, small specific surface area, and small pore volume. However, since improvement of capacitance per unit weight (F/g) and volume density (g/cm³) are inversely related as is described above, it is difficult to increase the capacitance.

### SUMMARY OF THE INVENTION

The present invention was completed in view of the above-described circumstances, and an object of the present invention is to provide a process for production of activated carbon which can realize large capacity even in the case in which the specific surface area and the pore volume are low, and to provide a carbon material which is used in the process.

Carbon material for activated carbon for an electric double layer capacitor of the present invention has not less than 0.2 of H/C (ratio of hydrogen and carbon) and not less than 1.50 g/ml of true specific gravity.

A reason why the carbon material of the present invention can realize an activated carbon having high capacitance is explained below. In a conventional producing method for a carbon material, if the true specific gravity is increased by a heating treatment of a raw organic material, the density of an activated carbon after the activating treatment is increased, volume density of the electrode (g/cm³) is improved, and capacitance per unit volume (F/cm³) is improved. In this case, since carbon in the raw organic material is made denser and dehydrogenated by the heating treatment, the ratio of hydrogen is reduced, and as a result, the ratio of hydrogen and carbon (H/C) in the carbon body is reduced. Furthermore, since permeability of alkali is deteriorated, the activating reaction becomes difficult, and the capacitance per unit weight (F/g) is deteriorated if the true specific gravity of the carbon material is increased, it is thought that capacitance per unit volume (F/cm³) which is the product of volume density of electrode (g/cm³) multiplied by capacitance per unit weight (F/g), will be deteriorated. However, the inventors discovered that the alkali activating reaction is a reaction between the C-H part in the carbon body and KOH, and researched further about a method of heating treatment by limiting the starting organic material. As a result, the inventors succeeded in obtaining an activated carbon having high capacitance by performing an alkali activation reaction of a carbon material having high true specific gravity and a large amount of residual hydrogen content.

Since such a carbon material for activated carbon for an electric double layer capacitor of the present invention has a high H/C ratio of not less than 0.2, a large number of hydrogen atoms which can react with such as alkali during the activating process exists, alkali activating reaction proceeds smoothly, and as result, an activated carbon having large capacitance can be produced. Furthermore, since true specific gravity is large (not less than 1.50 g/ml), an activated carbon having high density can be produced, and as a result, capacitance per unit volume (F/cm³) is increased. It should be noted that except for alkali activation, steam-activation or other activation method can be applied.

Furthermore, in a process for production of activated carbon of the present invention, a carbon material having an H/C ratio of not less than 0.2 and true specific gravity of not less than 1.50 g/ml is activated.

In such a process for production of activated carbon for an electric double layer capacitor of the present invention, since a carbon material having a high H/C ratio and high true specific ratio is activated, an activated carbon having high density and large capacitance can be provided.

As is explained above, by the process for production of activated carbon for an electric double layer capacitor and the carbon material which is used in the process of the present invention, an electric double layer capacitor and an activated carbon for the electric double layer capacitor both having large capacitance per unit volume can be obtained.

A favorable embodiment of the carbon material for activated carbon for an electrode of an electric double layer capacitor of the present invention is explained below.

As a result of researching about processes for production of activated carbon for capacitors having small pore volume, the inventors found out that an activated carbon for an electric double layer capacitor having large capacity can be obtained by specifying a carbon material used in alkali activating. The carbon material is a carbon material in which density of carbon is high, and in particular, a large amount of hydrogen is contained. Specifically, carbon material in which the true specific gravity is not less than 1.50 g/ml, and the H/C ratio is not less than 0.2, is necessary. In the case in which a carbon material meeting the above ranges is used, specific surface area of an obtained activated carbon can be in a range from 500 to 100 m²/g. Furthermore, volume capacity density can be in a range from 35 to 45 F/cm³ under 2.7 V of charging voltage. It is more desirable that the true specific gravity be in a range from 1.55 to 1.70 g/ml, and that the H/C ratio be in a range from 0.2 to 0.3 at the same time.

As a raw organic material used in the activated carbon of the present invention, an organic material which can achieve properties of the carbon material according to a first aspect of the invention is required. As such a raw organic material, condensed polynuclear aromatic compounds are desirable. In particular, compounds in which hydrogen content is large, softening point is relatively low, light gravity component is contained, and carbonization yield would be low, are more desirable. As such a compound, a pitch having graphitizable property and containing large amounts of non-mesophase material (low optical anisotropy phase), which is a condition before reaching bulk mesophase (optical anisotropy ratio 100%), is desirable as a raw material. Furthermore, a condensed polynuclear aromatic compound having side chains such as an alkyl group in which softening point is low, hydrogen content is at least not less than 4 wt%, that is, H/C is more than 0.35, is desirable. It is more desirable that H/C be more than 0.65, and softening point be in a range from 90 to 260°C.

Practically, heat-decomposed tar from crude oil having aromatic structure, and residual oil, petroleum pitch or petroleum coke which is obtained during distillation process or purification process of crude oil, can be cited. In particular, it is desirable that H/C ratio be high. However, it is desirable that impurities in the raw organic material be low, and ash content be not more than 1000 ppm. If metallic impurities such as Al, Si, V, Mg, Na, Ca exist, the impurities may be active sites during alkali activating, and as a result, pore distribution of activated carbon after activation may be influenced. Furthermore, capacitance of electric double layer capacitor may be deteriorated, gas may be generated, or resistance may be increased owing to the impurities remaining or reacting in the activated carbon. In particular, synthesized mesophase pitch obtained by polymerizing condensed polynuclear hydrocarbon or material containing the hydrocarbon under existence of hydrogen fluoride and boron trifluoride is desirably used since H/C ratio and chemical purity are both high.

The raw organic material is carbonized in an atmosphere of inert gas. The carbonizing temperature is desirably in a range from 600 to 900°C, more desirably in a range from 650 to 800°C from the viewpoint of inhibiting dehydrogenation and increasing hydrogen content. If the carbonizing time is too long, it is undesirable that dehydrogenation proceed.

Since heating treatment conditions of the carbon material are different depending on the kind of the raw organic material, the heating treatment conditions and the kind should be controlled to maintain the properties within the conditions of the present invention. A space of d002 surface measured by XRD (X-ray diffraction method) of obtained carbon material (carbon raw material) is in a range from 0.340 to 0.350 nm. If oxygen crosslinking treatment to make pitch infusible is performed before carbonization, carbon crystallite arrangement becomes disordered and carbon true specific gravity of carbon material is not increased. Therefore, this is undesirable because the carbon properties of the present invention cannot be realized. In the case in which oxygen contacting treatment such as oxygen crosslinking treatment or oxidizing treatment is required to improve carbonized yield and to stabilize activation, it is desirable that the treatment be performed under an oxygen atmosphere at not more than 260°C, more desirably at about 150°C. As a producing device of carbon material, a commonly used fixed bed heating furnace or fluidized bed heating furnace can be used. However, since the volume of the raw organic material increases during carbonization, a delayed coker or carbonizing device disclosed in Japanese Unexamined Patent Application Publication No. 2001-234177 is desirably used.

As a grinding process after the carbonization, a commonly used grinding method is performed. In such a grinding method, a grinding machine such as ball mill grinding, jet mill grinding, or high-speed rotation mill can be used. Since it is desirable that the grain size be uniform in the alkali activating reaction, the grain size can be controlled by classifying. In particular, particles having an average diameter of 1 to 50 µm is desirable. In the Example of the present invention, particles having an average diameter of 15 µm are used.

As an alkali activating process of the carbon material in the present invention, alkali activation performed with KOH or NaOH is desirable. The weight ratio of carbon and alkali KOH/C is desirably in a range from about 1.6 to 2.2. Activating can be performed at 600 to 1000°C; however, it is desirably in a range from 700 to 900°C in the present invention. In the case in which the activating temperature is not more than 700°C or not less than 900°C, it becomes difficult to increase the capacitance per unit volume. The amount of alkali metal such as K in the activated carbon is measured by a wet decomposition method, and it is known that not more than 300 ppm is desirable. In the activated carbon obtained in the present invention, the specific surface area measured by the nitrogen gas absorbing method is in a range from 500 to 100 m²/g, and total pore volume is in a range from 0.3 to 0.05 ml/g.

In an electrolyte solution of the present invention, electrolyte and solvent are not limited in particular, but a combination of electrolyte and solvent which can make a high-concentration electrolyte solution is desirable. Practically, quaternary ammonium tetrafluoroborate such as tetraethyl ammonium, trimethylethyl ammonium, or dimethyldiethyl ammonium, pyrrolidinium cation such as dimethyl pyrrolidinium, methylethyl pyrrolidinium, or diethyl pyrrolidinium, and alkyl imidazolium which is an ionic liquid such as ethylmethyl imidazolium can be used. As a solvent, cyclic carbonate such as propylene carbonate or ethylene carbonate, carbonate derivative containing a halogen such as Cl and F, acetonitrile, or a chain carbonate such as dimethyl carbonate, ethyl carbonate, and diethyl carbonate may be used alone or in combination.

### BRIEF DESCRIPTION OF DRAWINGS

Fig. 1 is a partial cross sectional drawing of a button type electric double layer capacitor which is an example of an electric double layer capacitor.
Fig. 2 is a graph showing a relationship of H/C ratio and true specific gravity of a carbon material of an Example of the present invention.

### EXPLANATION OF REFERENCE NUMERAL

1...Button-type electric double layer capacitor, 2... Case, 3,4...Polarizing electrodes, 5...Spacer, 6...Opening part, 7...Body, 8... Cover plate, 9... Sealing material

### EXAMPLE

The present invention is further explained by way of Examples.

Raw organic material A used in the Examples is a chemically-synthesized pitch using methyl naphthalene as a condensed polynuclear aromatic compound, and raw organic material B is a chemically-synthesized pitch using naphthalene. Raw organic material C of the Comparative Example is a mesophase pitch MPH produced by MITSUBISHI GAS CHEMICAL COMPANY, INC.

First, the raw organic materials A to C were synthesized as follows.

### Synthesis of raw organic material A

1500 g of methyl naphthalene, 102 g of HF, and 108 g of BF₃ were put in a 5L autoclave made of hastelloy equipped with a heating device, stirring device, extract port, and nitrogen introducing line. Temperature was increased to 250°C over 1 hour, and heating and stirring were continued for 4 hours at 250°C. Pressure of the reaction was 2.1 MPa. Next, the extract port at the upper part of the autoclave was slowly opened to normalize the internal pressure. Heated nitrogen at 350°C was introduced to remove catalyst completely, to obtain raw organic material A.

### Synthesis of raw organic material B

2000 g of naphthalene, 97 g of HF, and 83 g of BF₃ were put in a 5L autoclave made of hastelloy equipped with a heating device, stirring device, extract port, and nitrogen introducing line. Temperature was increased to 270°C over 1 hour, and heating and stirring were continued for 4 hours at 270°C. Pressure of the reaction was 2.2 MPa. Next, the extract port at the upper part of the autoclave was slowly opened to normalize the internal pressure. Heated nitrogen at 350°C was introduced to remove catalyst completely, to obtain raw organic material B.

### Synthesis of raw organic material C

Similar to the case of the raw organic materials A and B, generally sold mesophase pitch (trade name: AR mesophase pitch MPH grade, produced by MITSUBISHI GAS CHEMICAL COMPANY, INC.) obtained by putting naphthalene, HF, and BF₃ in a 5L autoclave made of hastelloy equipped with a heating device, stirring device, extract port, and nitrogen introducing line is the raw organic material C. Practically, methods disclosed in Japanese Unexamined Patent Application Publication No. Sho 63-146920, No. Hei 01-139621, No. Hei 01-254796, or No. Hei 03-249218 can be applied.

Properties of each raw organic material are shown in Table 1.
Table 1 shows that A to C exhibit mutually different optical anisotropy rate, softening point, H/C ratio, and structure of organic molecules. As a practical producing method of activated carbon for an electric double layer capacitor, a method is known in which alkali activating method of carbon material was employed.

Using the raw organic material A to C obtained above, carbon materials of Examples and Comparative Examples were produced as follows.

### Example 1

The raw organic material B was coarsely ground into particles of about 1 mm. Under a nitrogen atmosphere, 10 g of this ground powder was put in an alumina crucible, heated at a heating rate of 200°C/hr, and carbonized at 700°C, and the temperature was maintained for 1 hour to produce a carbon material. Weight of obtained carbon material was about 7.5 g. This was ground into an average particle diameter of 16 µm. True specific gravity and elemental composition of the obtained carbon material was analyzed by a method explained below. Next, 2.5 g of this carbon material powder and potassium hydroxide of 95% purity were mixed at a weight ratio of KOH/C=2.0, the mixture was put in a Ni boat reaction container. The mixture was heated at 450°C for 3 hours and then 800°C for 3 hours under a nitrogen atmosphere. After the reaction, the reaction product was washed with water to remove alkali, washed with hydrochloric acid, and washed with distilled water. The product was dried to obtain activated carbon.

### Example 2

Except that the carbonizing temperature was 750°C, carbon material and activated carbon of Example 2 was produced in a similar manner as in Example 1.

### Example 3

Except that the raw organic material A was used and the carbonizing temperature was 650°C, carbon material and activated carbon of Example 3 was produced in a similar manner as in Example 1.

### Example 4

Except that the carbonizing temperature was 700°C, carbon material and activated carbon of Example 4 was produced in a similar manner as in Example 3.

### Example 5

Except that the carbonizing temperature was 750°C, carbon material and activated carbon of Example 4 was produced in a similar manner as in Example 3.

### Comparative Example 1

Except that the raw organic material C was used and the carbonizing temperature was 650°C, carbon material and activated carbon of Comparative Example 1 was produced in a similar manner as in Example 1.

### Comparative Example 2

Except that the carbonizing temperature was 800°C, carbon material and activated carbon of Comparative Example 2 was produced in a similar manner as in Example 1.

Next, each activated carbon of Examples and Comparative Examples, carbonblack (conductive filler), and polytetrafluoroethylene (PTFE, binder) was weighed at a ratio of 85.6: 9.4: 5, and they were mixed. The mixture was rolled to obtain an electrode sheet having forming density of the electrode in a range from 0.8 to 1.2 g/cm³ and thickness 150 µm.

Two sheets of polarizing electrode having a diameter of 20 mm were cut out of the electrode sheet. A glass fiber separator having a diameter of 25 mm and thickness of 0.35 mm was put between the polarizing electrodes to produce one pair of button type electric double layer capacitor cell. The cell was dried for more than 3 hours in a vacuum drying machine and immersed into electrolyte solution. 1.8 mol/L propylene carbonate solution of triethylmethyl ammonium tetrafluoroborate (C₂H₅)₃CH₃NBF₄ was used as the electrolyte solution.

Carbonizing conditions and properties of each activated carbon are shown in Table 2.

Measuring methods are explained as follows.

### Measurement of capacitance per unit volume (F/cm³)

Button type electric double layer capacitor was made by using electrode of diameter 20 mm x 0.15 mm, separator of 70 µm, and 1.8 mol/L TEMABF4/PC as an electrolyte solution. Charging of constant current and voltage was performed for 90 minutes until the voltage reached 2.7 V, and discharging of constant current 5 mA was performed for 90 minutes until the voltage reached 0 V Capacitance per unit volume of electrode (F/cm³) was calculated by an energy conversion method.

### Measurement of specific surface area

Nitrogen gas absorbing method was employed to measure pore volume and specific surface area of activated carbon, using ASAP2010 standard type (produced by SHIMADZU Corporation.) by a multipoint method. Pore distribution was analyzed by analysis software V2.0. Activated carbon used in this measurement was vacuum degassed for 6 hours at 300°C. 0.3 g of the activated carbon was measured. BET value was used to measure specific surface area, and total pore volume was measured at relative pressure 0.98.

### Calculation of H/C ratio (element ratio)

Element analysis was performed using the below-mentioned devices. Element ratio was calculated according to the results of the composition analysis.
C, H: CHN coder MT-5, produced by YANACO BUNSEKI KOGYO)
O: CHN coder MT-3, produced by YANACO BUNSEKI KOGYO)
1.5 mg of the carbon material powder was used in the analysis of H and C atoms, 3 mg was used in the analysis of O atom. The carbon material powder was vacuum dried for more than 3 hours at 200°C, and cooled in a desiccator. Mearsurement was performed at N=3, and the average value was measured. The raw material pitch was vacuum dried for 3 hours at 100°C, and measurement was performed in a similar manner.

### Measurement of true specific gravity

Using 1 g of carbon material, true specific gravity was measured by butanol substituting method at N=3 using a pycnometer, and the average value was employed.

### XRD (X-ray diffraction) analysis, and analysis condition

A space between (002) surfaces of the carbon material, that is, d002, was measured by an X-ray diffraction method. The device was MXP18, produced by MAC SCIENCE Co., Ltd. Dried activated carbon powder was put within a range of 2.5 mm x 2.5 mm in a glass cell, and the cell was put in the device. Diffraction patterns were measured by a step scanning method in conditions described below.
Range of measurement: 2θ 15 to 30 degrees
Target: Cu
Output: 40 kV, 100mA
Step width: 0.05 deg
Count time: 1.0 sec

Obtained X-ray patterns were analyzed by using an analysis software (trade name: XPRESS Ver 1.0.3, produced by MAC SCIENCE Co., Ltd.) in the below-mentioned method.

### Noise treatment condition

Half-value width: 0.5 deg
Noise level: 5.0

### Peak analysis

Differential coefficient: 20.0

The d value calculated by a diffraction line peak analyzed by above-mentioned method was defined as d002.

As shown in Table 2, in Examples 1 to 5 in which H/C ratio and true specific gravity is within the range of the present invention, capacitance per unit volume was desirably at least more than 35.2 F/cm³. On the other hand, in Comparative Examples 1 and 2 which are out of the range of present invention, the highest value was 32.5 F/cm³. In particular, Example 5 was 1.33 times larger than Comparative Example 2 which has same true specific gravity.

As a reason why capacitance per unit volume differs from each other in spite of the same true specific gravity, the alkali activating reaction site seems to be specified according to the difference of ratio of hydrogen in the carbon body. As a result, activated carbon having small specific surface area in which graphite structure is maintained is generated, and activated carbon having high capacitance per unit volume (F/cm³) can be obtained.

H/C ratio and true specific gravity of each carbon material are shown in Fig. 2. Furthermore, capacitance per unit volume of activated carbon obtained using this carbon material powder is shown. In Fig. 2, left and upper area, a solid line is the area of the present invention. As is clear from Fig. 2, by producing carbon material in which both true specific gravity and H/C ratio are improved and alkali activating this carbon material, an activated carbon for electric double layer capacitor having high capacitance can be produced.

**Table 1**

| | Kind of raw material | Optical anisotropy ratio (%) | Softening point (°C) | H/C |
|---|---|---|---|---|
| Raw material A | Synthesized pitch | 4 | 170 | 0.73 |
| Raw material B | Synthesized pitch | 30 | 230 | 0.67 |
| Raw material C | Synthesized pitch | 100 | 285 | 0.63 |

**Table 2**

| | | | Carbonizing method | | | Carbon material | | | Activated carbon | | |
|---|---|---|---|---|---|---|---|---|---|---|---|
| | Raw material | Heating rate (°C/hr) | Carbonizing temperature (°C) | Holding Time (hr) | H/C | True specific gravity (g/ml) | Density of electrode (g/cm³) | Capacitance per unit weight (F/g) | Capacitance per unit volume (F/cm³) | Specific surface area (m²/g) | Pore volume (ml/g) |
| Example 1 | B | 200 | 700 | 1 | 0.245 | 1.53 | 0.94 | 39.5 | 37.1 | 420 | 0.16 |
| Example 2 | B | 200 | 750 | 1 | 0.205 | 1.6 | 1.02 | 38.5 | 39.3 | 303 | 0.12 |
| Example 3 | A | 200 | 650 | 1 | 0.295 | 1.5 | 0.88 | 40.0 | 35.2 | 610 | 0.23 |
| Example 4 | A | 200 | 700 | 1 | 0.250 | 1.55 | 0.96 | 39.5 | 37.9 | 395 | 0.15 |
| Example 5 | A | 200 | 750 | 1 | 0.210 | 1.62 | 1.08 | 40.0 | 43.2 | 190 | 0.07 |
| Comparative Example 1 | C | 200 | 650 | 1 | 0.280 | 1.44 | 0.75 | 38.0 | 28.5 | 1020 | 0.42 |
| Comparative Example 2 | C | 200 | 800 | 1 | 0.180 | 1.62 | 0.93 | 34.9 | 32.5 | 590 | 0.25 |

As explained above, the present invention can be applied to an activated carbon for electric double layer capacitor having high capacitance and high output, which can be used as a driving power supply or a storage battery of various devices such as for vehicles.

A carbon material for an electric double layer capacitor in which a ratio of hydrogen atoms to carbon atoms, H/C, is not less than 0.2 and a true specific gravity is not less than 1.50 g/ml, is provided. Furthermore, a process for production of an activated carbon for an electric double layer capacitor in which a carbon material having a ratio of hydrogen atoms to carbon atoms, H/C, not less than 0.2, and a true specific gravity not less than 1.5 g/ml is activated, is provided.

## Claims

1. A carbon material for an activated carbon for an electric double layer capacitor, wherein a ratio of hydrogen atoms to carbon atoms, H/C, is in the range from 0.2to 0.3, and true specific gravity is not less than 1.5 g/ml.

2. The carbon material for an activated carbon for an electric double layer capacitor according to claim 1, wherein a pitch having a softening point not more than 260°C is used as a raw organic material of the carbon material.

3. An electric double layer capacitor comprising an activated carbon produced by activating a carbon material having a ratio of hydrogen atoms to carbon atoms, H/C, in the range from 0.2 to 0.3 and true specific gravity not less than 1.5 g/ml.

4. The electric double layer capacitor according to claim 3, wherein a pitch having a softening point not more than 260°C is used as a raw organic material of the carbon material.

5. A process for production of an activated carbon for electric double layer capacitor, the process comprising:
activating a carbon material according to claim 1 having a ratio of hydrogen atoms to carbon atoms, H/C, in the range from 0.2 to 0.3 and a true specifc gravity not less than 1.5 g/ml.

## Patentansprüche

1. Kohlenstoffmaterial für eine Aktivkohle für einen elektrischen Doppelschicht-Kondensator, wobei ein Verhältnis von Wasserstoffatomen zu Kohlenstoffatomen, H/C, im Bereich von 0,2 bis 0,3 liegt, und die echte Dichte nicht weniger als 1,5 g/ml ist.

2. Kohlenstoffmaterial für einen Aktivkohle für einen elektrischen Doppelschicht-Kondensator nach Anspruch 1, wobei Pech mit einem Erweichungspunkt von nicht mehr als 260°C als das rohe organische Material des Kohlenstoffmaterials verwendet wird.

3. Elektrischer Doppelschicht-Kondensator, umfassend Aktivkohle, der durch Aktivieren eines Kohlenstoffmaterials mit einem Verhältnis von Wasserstoffatomen zu Kohlenstoffatomen, H/C, im Bereich von 0,2 bis 0,3 hergestellt wird, und einer echten Dichte von nicht weniger als 1,5 g/ml.

4. Elektrischer Doppelschicht-Kondensator nach Anspruch 3, wobei Pech mit einem Erweichungspunkt von nicht mehr als 260°C als das rohe organische Material des Kohlenstoffmaterials verwendet wird.

5. Verfahren zur Herstellung von einer Aktivkohle für einen elektrischen Doppelschicht-Kondensator, wobei das Verfahren umfasst:
Aktivieren eines Kohlenstoffmaterials nach Anspruch 1 mit einem Verhältnis von Wasserstoffatomen zu Kohlenstoffatomen, H/C, im Bereich von 0,2 bis 0,3 und einer echten Dichte von nicht weniger als 1,5 g/ml.

## Revendications

1. Matériau carboné pour un charbon actif destiné à un condensateur électrique à double couche, dans lequel un rapport entre atomes d'hydrogène et atomes de carbone, H/C, est dans la gamme de 0,2 à 0,3, et la masse volumique absolue n'est pas inférieure à 1,5 g/mL.

2. Matériau carboné pour un charbon actif destiné à un condensateur électrique à double couche selon la revendication 1, dans lequel un brai ayant un point de ramollissement non supérieur à 260 °C est utilisé comme matière première organique du matériau carboné.

3. Condensateur électrique à double couche comprenant un charbon actif produit par activation d'un matériau carboné ayant un rapport entre atomes d'hydrogène et atomes de carbone, H/C, dans la gamme de 0,2 à 0,3 et une masse volumique absolue non inférieure à 1,5 g/mL.

4. Condensateur électrique à double couche selon la revendication 3, dans lequel un brai ayant un point de ramollissement non supérieur à 260 °C est utilisé comme matière première organique du matériau carboné.

5. Procédé de production d'un charbon actif destiné à un condensateur électrique à double couche, le procédé comprenant :
l'activation d'un matériau carboné selon la revendication 1 ayant un rapport entre atomes d'hydrogène et atomes de carbone, H/C, dans la gamme de 0,2 à 0,3 et une masse volumique absolue non inférieure à 1,5 g/mL.
